(19) Europäisches Patentamt
European Patent Office
Office européen des brevets

(11) **EP 4 610 131 A1**

(12) **EUROPEAN PATENT APPLICATION**

(43) Date of publication:
03.09.2025 Bulletin 2025/36

(21) Application number: 25156886.1

(22) Date of filing: 10.02.2025

(51) International Patent Classification (IPC):
**B60W 30/188** (2012.01)

(52) Cooperative Patent Classification (CPC):
**B60W 30/188;** B60T 17/18; B60W 40/12;
B60W 50/038; B60W 2050/0037; B60W 2510/184;
B60W 2520/10; B60W 2530/00; B60W 2530/10;
B60W 2530/16; B60W 2555/20; B60W 2720/106;
B60W 2720/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.02.2024 JP 2024028200

(71) Applicants:
• **TOYOTA JIDOSHA KABUSHIKI KAISHA**
**Aichi-Ken 471-8571 (JP)**
• **ADVICS CO., LTD.**
**Kariya-shi, Aichi-ken 448-8688 (JP)**

(72) Inventors:
• **IWAMOTO, Takami**
**Toyota-shi, 471-8571 (JP)**
• **KUNITOMO, Masaya**
**Toyota-shi, 471-8571 (JP)**
• **ASABA, Kei**
**Toyota-shi, 471-8571 (JP)**
• **SENDA, Tomoya**
**Toyota-shi, 471-8571 (JP)**
• **NAKANO, Hiroshi**
**KARIYA-SHI, 448-8688 (JP)**

(74) Representative: **J A Kemp LLP**
**80 Turnmill Street**
**London EC1M 5QU (GB)**

(54) **VEHICLE CONTROL SYSTEM**

(57) An aspect of the present invention relates to a vehicle control system configured to control a vehicle. The vehicle control system includes an electronic control unit (20) configured to limit a driving force to be applied to the vehicle based on a brake temperature that is a temperature of a friction brake (10) provided on a wheel of the vehicle.

FIG. 2

EP 4 610 131 A1

**Description**

BACKGROUND OF THE INVENTION

1. Field of the Invention

The present invention relates to a vehicle control device that controls a vehicle.

2. Description of Related Art

In a vehicle control device described in Chinese Unexamined Patent Application Publication No. 113320383 (CN 113320383 A), in a case where a brake temperature that is a temperature of a friction brake is higher than a set temperature in a non-operating state of the friction brake, a traveling speed of a vehicle is limited, and the traveling speed is reduced the next time the friction brake is actuated. As a result, the friction brake is less likely to be in an overheated state, and the likelihood of brake fade can be reduced.

SUMMARY OF THE INVENTION

The present invention provides a vehicle control device that reduces the likelihood of brake fade while alleviating driver discomfort.
An aspect of the present invention relates to a vehicle control system configured to control a vehicle. The vehicle control system includes an electronic control unit configured to limit a driving force to be applied to the vehicle based on a brake temperature that is a temperature of a friction brake provided on a wheel of the vehicle.
In the aspect, the electronic control unit may be configured to start limiting the driving force in a case where the brake temperature is higher than a start threshold value that is a threshold value in a non-operating state of the friction brake, and end limiting the driving force in a case where the brake temperature is lower than an end threshold value that is lower than the start threshold value.
In the aspect, the electronic control unit may be configured to limit the driving force such that an acceleration of the vehicle does not exceed a first upper limit value, in a case where the brake temperature is higher than a first start threshold value, and limit the driving force such that the acceleration does not exceed a second upper limit value that is greater than the first upper limit value, in a case where the brake temperature is equal to or lower than the first start threshold value and higher than a second start threshold value.
In the aspect, the electronic control unit may be configured to set an upper limit value of an acceleration as a limit value of the driving force based on the brake temperature, and limit the driving force such that the acceleration does not exceed the upper limit value.
In the aspects, in the non-operating state of the friction brake, the driving force of the vehicle is limited based on the brake temperature that is the temperature of the friction brake. Consequently, driver discomfort can be alleviated as compared with a case where a traveling speed of the vehicle is limited. In addition, the next time the friction brake is actuated, the friction brake is less likely to be in an overheated state, and the likelihood of brake fade can be reduced.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

FIG. 1 is a diagram conceptually showing a vehicle control system according to an embodiment of the present invention;
FIG. 2 is a flowchart representing a driving force limitation program stored in a storage unit of the vehicle control system;
FIG. 3 is a diagram showing equations used to acquire a brake temperature of the vehicle control system;
FIG. 4 is a diagram conceptually showing a friction brake that is a target from which the brake temperature is acquired;
FIG. 5 is a flowchart representing another driving force limitation program stored in the storage unit of the vehicle control system;
FIG. 6 is a flowchart representing still another driving force limitation program stored in the storage unit; and
FIG. 7 is a graph representing an acceleration upper limit value decision map stored in the storage unit.

DETAILED DESCRIPTION OF EMBODIMENTS

Hereinafter, a vehicle control system according to an embodiment of the present invention will be described in detail with reference to the drawings. The vehicle control system is configured to control a drive device of a vehicle.
The vehicle control system according to the present embodiment includes a vehicle control ECU 20. The vehicle control ECU 20 is primarily based on a computer and includes a driving force limitation unit 22, a brake temperature acquisition unit 24, and the like. The vehicle control ECU 20 controls the driving force to be applied to the vehicle by controlling the drive device 26. The drive device 26, a main switch 28, a traveling state detection device 30, an outside air temperature sensor 36, and the like are connected to the vehicle control ECU 20.
The drive device 26 drives the vehicle. The drive device 26 may or may not include an electric motor. The main switch 28 is a main switch for switching the entire vehicle ON and OFF and can be, for example, an ignition switch (IGSW) 28. The outside air temperature sensor 36 measures an outside air temperature that is a temperature around the vehicle.

The traveling state detection device 30 detects a traveling state of the vehicle and includes a wheel speed sensor 32, an acceleration sensor 34, and the like. Each of the wheel speed sensors 32 is provided on a corresponding one of a plurality of wheels of the vehicle and detects a rotational speed of the corresponding wheel. A traveling speed of the vehicle is acquired based on rotational speeds of the wheels. The acceleration sensor 34 detects a forward-rearward acceleration (including deceleration) to be applied to the vehicle.

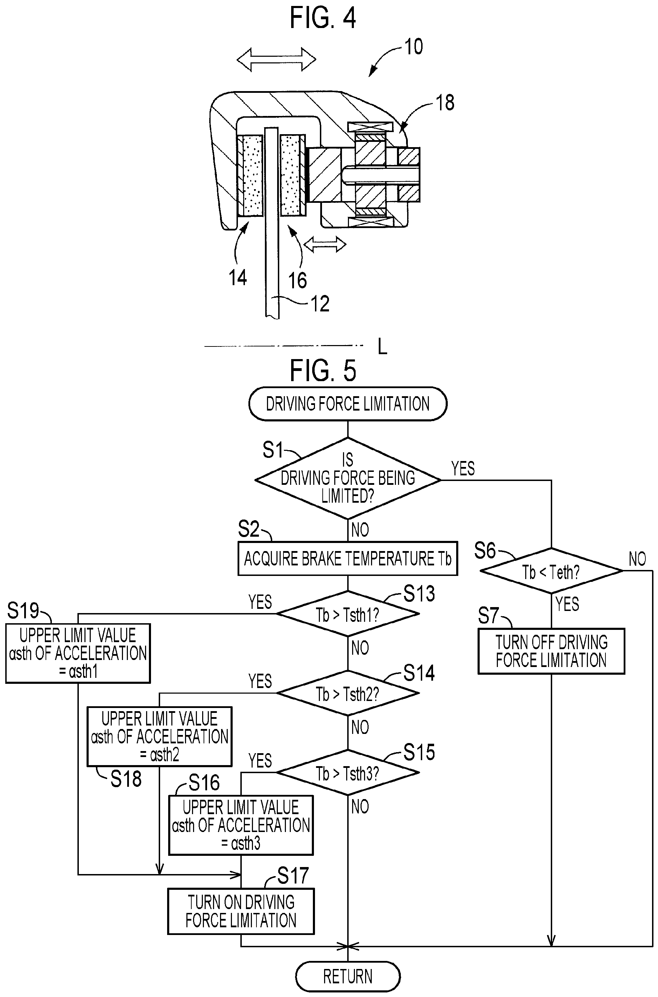

The brake temperature acquisition unit 24 estimates and acquires a brake temperature that is a temperature of a friction brake 10. The friction brakes 10 are provided on the wheels of the vehicle, respectively. As shown in FIG. 4, the friction brake 10 restrains the rotation of the wheel by frictionally engaging a pair of friction engagement members 14, 16 with a brake rotating body 12 using an actuator 18. The brake rotating body 12 is rotatable integrally with the wheel, and the friction engagement members 14, 16 are held by a nonrotating body.

The brake temperature acquisition unit 24 can be, for example, a temperature estimation device described in Japanese Unexamined Patent Application Publication No. 2023-89822 (JP 2023-89822 A). The brake temperature acquisition unit 24 estimates and acquires the current brake temperature by adding an integrated value of a temperature change value $\Delta Tb$ during time $\Delta s$ to an initial value of the brake temperature. The brake temperature acquisition unit 24 acquires the brake temperature at all times while the IGSW 28 is ON.

The temperature change value $\Delta Tb$ is acquired based on a value obtained by subtracting a released energy amount that is an energy amount released from the brake rotating body 12 during time $\Delta s$ from a supplied energy amount that is an energy amount supplied to the brake rotating body 12 during time $\Delta s$. The value obtained by subtracting the released energy amount from the supplied energy amount can be considered to be an absorbed energy amount that is an energy amount absorbed by the brake rotating body 12 during time $\Delta s$.

In a case where the supplied energy amount is greater than the released energy amount in an operating state of the friction brake 10, the temperature change value $\Delta Tb$ is often a positive value. On the other hand, since the supplied energy amount is zero in the non-operating state of the friction brake 10, the temperature change value $\Delta Tb$ is acquired based on the released energy amount. The temperature change value $\Delta Tb$ is often a negative value.

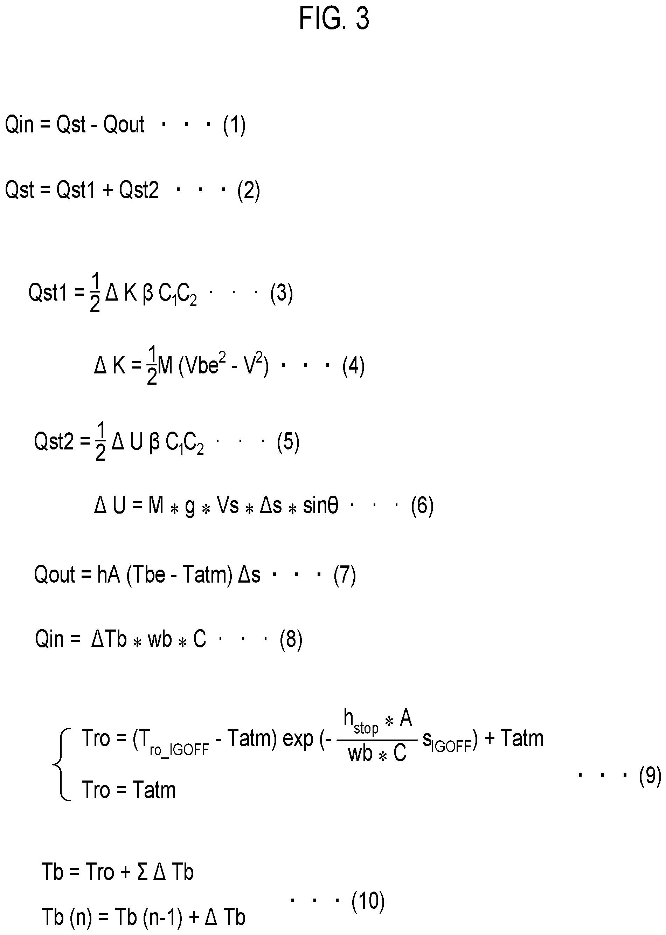

In the operating state of the friction brake 10, as indicated in Equation (1) of FIG. 3, an absorbed energy amount Qin absorbed by the brake rotating body 12 of the friction brake 10 of one wheel during time $\Delta s$ can be acquired by subtracting a released energy amount Qout, which has been released, from a supplied energy amount Qst, which has been supplied. The supplied energy amount Qst is an energy amount supplied to the brake rotating body 12 of one friction brake 10 due to the actuation of the friction brake 10 of one wheel during time $\Delta s$. The supplied energy amount can be acquired as an energy amount Qst lost by the vehicle due to the actuation of one friction brake 10 during time $\Delta s$. The released energy amount Qout is an energy amount released from one brake rotating body 12 during time $\Delta s$.

The energy amount Qst lost by the vehicle due to the actuation of one friction brake 10 during time $\Delta s$ can be represented by a kinetic energy amount Qst1 lost by the vehicle during time $\Delta s$ for one wheel and a potential energy amount Qst2 lost per wheel by the vehicle during time $\Delta s$, as indicated in Equation (2). The vehicle is decelerated by the actuation of the friction brake 10, but while the vehicle is traveling uphill, the vehicle is also decelerated by the uphill gradient. Therefore, in a case where the energy amount Qst lost by the vehicle due to the actuation of one friction brake 10 during time $\Delta s$ is acquired, the kinetic energy amount lost by the vehicle during time $\Delta s$ and the potential energy amount Qst2 lost by the vehicle during time $\Delta s$ are taken into consideration. In the present embodiment, a potential energy amount $\Delta U$ lost by the vehicle while the vehicle is traveling on a road with an uphill gradient is set to a negative value, and a potential energy amount $\Delta U$ lost by the vehicle while the vehicle is traveling on a road with a downhill gradient is set to a positive value.

The kinetic energy amount Qst1 lost by the vehicle during time $\Delta s$ for one wheel can be represented by using $\Delta K$, $\beta$, $C_1$, $C_2$, and the like as indicated in Equation (3). $\Delta K$ is a kinetic energy amount lost by the entire vehicle. $\beta$ is a front-to-rear distribution ratio of a braking force. $C_1$ is a traveling resistance loss coefficient. $C_2$ is a coefficient representing energy loss due to resistance caused by friction between the wheel and the road surface, and the like. A factor of 1/2 is for obtaining the kinetic energy amount per wheel. Since two wheels, that is, right and left wheels, are located on each of the front and rear wheel sides, 1/2 is used as a multiplier. The kinetic energy amount $\Delta K$ lost by the entire vehicle can be represented by using M, Vbe, and V as indicated in Equation (4). M is a vehicle mass. Vbe is a traveling speed before time $\Delta s$. V is a current traveling speed (the present traveling speed).

The potential energy amount Qst2 lost per wheel by the vehicle during time $\Delta s$ can be represented by using $\Delta U$, $\beta$, $C_1$, $C_2$, and the like as indicated in Equation (5). $\Delta U$ is the potential energy amount lost by the entire vehicle. $\Delta U$ can be represented by using M, Vs, g, $\theta$, and $\Delta s$ as indicated in Equation (6). Vs is an average speed during time $\Delta s$. For simplicity, the average speed Vs can be a current speed V, a speed Vbe before time $\Delta s$, or the like. g is a gravitational acceleration, and $\theta$ is a road surface gradient. In Equation (6), "Vs * $\Delta s$ * sin$\theta$" repre-

sents a height difference in the position of the vehicle. * represents multiplication.

The road gradient θ can be acquired based on a detection value of the acceleration sensor 34. The detection value of the acceleration sensor 34 includes an acceleration due to a change in the wheel speed detected by the wheel speed sensor 32 and an acceleration due to the road gradient θ. Therefore, the acceleration due to the road gradient can be acquired by subtracting the acceleration due to the change in the traveling speed from the detection value of the acceleration sensor 34.

Additionally, in a case where the energy amount Qst lost by the vehicle due to the actuation of one friction brake 10 during time $\Delta s$ is acquired, an energy amount Qst3 lost due to regenerative braking or the like may also be taken into consideration.

Meanwhile, the released energy amount Qout released by the brake rotating body 12 for one wheel during time $\Delta s$ can be represented by using h, A, Tbe, Tatm, and $\Delta s$ as indicated in Equation (7). h is a thermal conductivity of the brake rotating body 12. A is an area of a sliding portion between the brake rotating body 12 and the friction engagement members 14, 16. The is the brake temperature before time $\Delta s$. Tatm is an outside air temperature. The outside air temperature Tatm can be acquired as a detection value of the outside air temperature sensor 36.

Then, the temperature of the brake rotating body 12 changes because of the absorbed energy amount Qin. Therefore, as indicated in Equation (8), the temperature change value $\Delta Tb$ of the brake rotating body 12 during time $\Delta s$ can be represented by using Qin, wb, and C. wb is the mass of the brake rotating body 12, and C is the specific heat of the brake rotating body 12.

An initial value Tro of the brake temperature, which is the temperature of the brake rotating body 12 at a point in time when the IGSW 28 is switched from OFF to ON this time, can be represented as indicated in Equation (9). In a case where a sufficient long set time elapses from when the IGSW 28 is last switched from ON to OFF until the IGSW 28 is switched from OFF to ON this time, the initial value Tro is set to the outside air temperature Tatm.

On the other hand, in a case where the elapsed time from when the IGSW 28 is last switched from ON to OFF is shorter than the set time, the initial value Tro can be represented by using $T_{ro\_IGOFF}$, $h_{stop}$, and $s_{IGOFF}$. $T_{ro\_IGOFF}$ is the temperature of the brake rotating body 12 in a case where the IGSW 28 is switched from ON to OFF. $h_{stop}$ is the thermal conductivity while the vehicle is stopped. $s_{ICOFF}$ is the elapsed time while the IGSW 28 is OFF.

As indicated in Equation (10), a current brake temperature Tb is acquired by adding the integrated value of the temperature change value $\Delta Tb$ during time $\Delta s$ to the initial value Tro of the brake temperature acquired in Equation (9). In other words, the brake temperature (current value) Tb(n) is acquired by adding the temperature change value $\Delta Tb$ during time $\Delta s$ to a last

acquired brake temperature Tb(n-1).

Then, in the non-operating state of the friction brake 10, in a case where the brake temperature Tb is higher than a start threshold value Tsth that is a predetermined threshold value, the driving force is limited such that the acceleration does not exceed an upper limit value αsth. By limiting the driving force, an increase in the traveling speed of the vehicle can be restrained, thereby making it difficult for the traveling speed to be faster than the set speed. This can make it difficult for the friction brake 10 to be actuated in a state in which the traveling speed is faster than the set speed. This is because, when the friction brake 10 is actuated in a state in which the traveling speed is faster than the set speed, a high load is applied to the friction brake 10, the brake temperature increases, and the fade is likely to occur. In addition, by limiting the driving force, the time it takes for the traveling speed of the vehicle to exceed the set speed can be extended, thereby increasing the cooling time of the friction brake 10. This enables the friction brake 10 to be effectively cooled before the friction brake 10 is actuated. As a result, the likelihood of brake fade can be reduced.

In the present embodiment, for example, the start threshold value Tsth and the upper limit value αsth of the acceleration can be set in advance based on a change in the brake temperature or the like assuming that the vehicle has traveled in a predetermined set pattern. For example, assuming that the vehicle has traveled in the predetermined set pattern, in a case where limiting the driving force is started such that the acceleration does not exceed the upper limit value αsth from a point in time when the brake temperature Tb reaches the start threshold value Tsth, the start threshold value Tsth and the upper limit value αsth can be acquired and set based on the cooling effect and the like before the friction brake 10 is subsequently actuated.

The set pattern can be, for example, to repeat the following sequence a set number of times np: "(i) accelerate to a set speed vp1; (ii) actuate the friction brake 10 to decelerate until the traveling speed reaches a set speed vp2 at a deceleration Gp1; and (iii) travel for the set time at the set speed vp2". In the set pattern, the set speed vp1 can be, for example, set to a speed at which the friction brake 10 is considered to be in a high load state in which a high load is applied in a case where the friction brake 10 is actuated. In a case where the vehicle has traveled in the set pattern, the friction brake 10 is in a high load state for each actuation, thereby resulting in a high brake temperature. After the friction brake 10 has been actuated the set number of times np, it is considered that the friction brake 10 may be in an overheated state, thereby increasing the likelihood of brake fade.

From the above, in the present embodiment, the start threshold value Tsth can be set to a temperature that is lower than a temperature at which the friction brake 10 is considered to be in an overheated state. By starting limiting the driving force from a point in time when the brake temperature Tb reaches the start threshold value Tsth, the friction brake 10 can be effectively restrained from being in an overheated state at the temperature.

Additionally, the start threshold value Tsth and the upper limit value $\alpha$sth of the acceleration are decided by the specifications of the vehicle and the like. Examples of the specifications of the vehicle include the weight of the vehicle, cooling performance, a brake size, and a front-to-rear braking force distribution ratio.

For example, in a vehicle having a heavy weight, the start threshold value and the upper limit value of the acceleration are decided to be smaller values than those in a vehicle having a light weight. This is because a high load is likely to be applied to the friction brake 10 in the vehicle having a heavy weight. In addition, in the friction brake 10 having excellent cooling performance, the start threshold value and the upper limit value of the acceleration are decided to be larger values than those in the friction brake having poor cooling performance. This is because the necessity to limit the driving force is low. For example, in a case where the brake rotating body 12 has a ventilated structure, it is considered that cooling performance is excellent. For the friction brake 10 having a large brake size, the start threshold value and the upper limit value of the acceleration are decided to be larger values than those in the friction brake having a small brake size. This is because heat is easily dissipated in the brake rotating body 12 having a large brake size. Based on the front-to-rear distribution ratio of the braking force, the start threshold value and the upper limit value of the acceleration for the front wheel's friction brake are often decided to be smaller values than those in the rear wheel's friction brake. Further, in a case where the braking force distribution ratio is large, the start threshold value and the upper limit value of the acceleration for the front wheel's friction brake 10 are set to smaller values than those in a case where the braking force distribution ratio is small. This is because, in the front wheels, in a case where the braking force distribution ratio is large, a pressing force that presses the friction engagement members 14, 16 against the brake rotating body is increased, thereby often resulting in a greater frictional force.

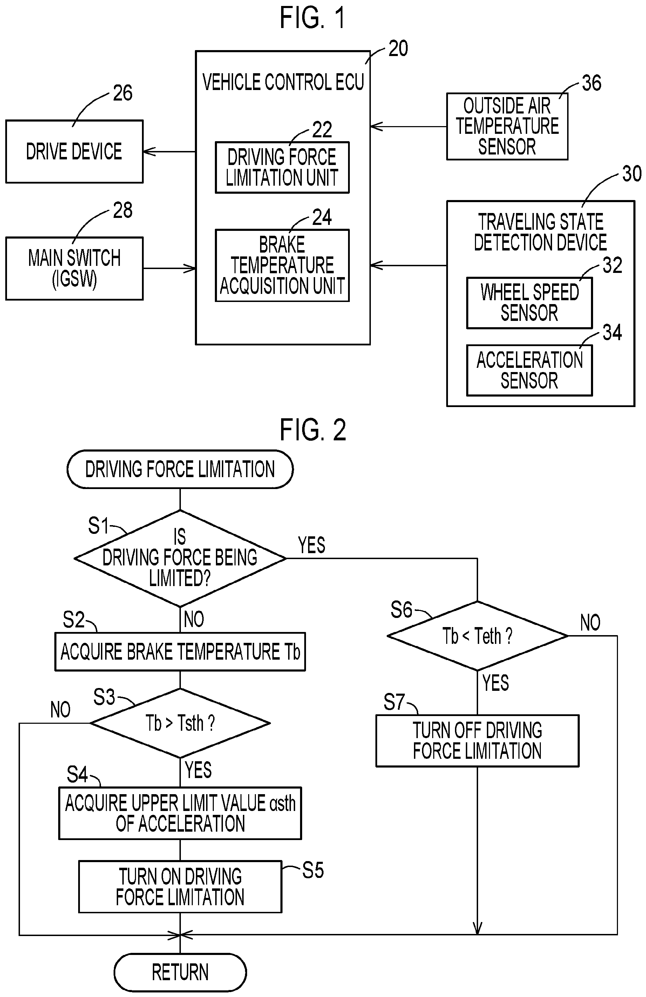

In the vehicle control system configured as described above, the driving force limitation program represented by the flowchart of FIG. 2 is executed at each predetermined set time. The driving force limitation program is executed while the friction brake 10 is in the non-operating state in the driving force limitation unit 22. In step 1 (hereinafter, abbreviated as S 1; the same applies to other steps), it is determined whether or not the driving force is being limited. In a case where the determination is NO, in S2, the brake temperature Tb acquired by the brake temperature acquisition unit 24 is read, and in S3, it is determined whether or not the brake temperature Tb is higher than the start threshold value Tsth. In a case where the determination is NO, S4 and subsequent steps are not executed.

In a case where the determination in S3 is YES, in S4, the upper limit value $\alpha$sth of the acceleration is acquired, and in S5, the driving force is limited by controlling the drive device 26 such that an acceleration $\alpha$ detected by the acceleration sensor 34 does not exceed the upper limit value $\alpha$sth.

Then, when the driving force is being limited, the determination in S 1 is YES, and in S6, it is determined whether or not the brake temperature Tb is lower than an end threshold value Teth that is a smaller value than the start threshold value Tsth. In a case where the determination is NO, the driving force is continuously limited, and when the determination is YES, the limitation control of the driving force is ended in S7.

As described above, in the present embodiment, the driving force is limited in a case where the brake temperature Tb is higher than the start threshold value Tsth. As a result, the likelihood of brake fade can be reduced the next time the friction brake 10 is actuated. Additionally, as compared with a case where the traveling speed is limited, the vehicle flow can be made less likely to be disrupted, and the driver discomfort can be alleviated. Further, by setting the end threshold value Teth to a smaller value than the start threshold value Tsth, the number of executions of the limitation control of the driving force can be reduced. Moreover, by setting the start threshold value Tsth and the end threshold value Teth to different values from each other, hunting can be restrained. As a result, the product value can be enhanced.

A plurality of start threshold values Tsth for the limitation control of the driving force can be provided, and the upper limit value $\alpha$sth of the acceleration can be gradually reduced. An example of the case is shown in FIG. 5.

In the present embodiment, a first start threshold value Tsth1, a second start threshold value Tsth2, a third start threshold value Tsth3, and the end threshold value Teth are set. The first start threshold value Tsth1, the second start threshold value Tsth2, the third start threshold value Tsth3, and the end threshold value Teth are values that decrease in this order.

$$Tsth1 > Tsth2 > Tsth3 > Teth$$

Additionally, regarding the upper limit value $\alpha$sth of the acceleration, a first upper limit value $\alpha$sth1, a second upper limit value $\alpha$sth2, and a third upper limit value $\alpha$sth3 are provided, and the first upper limit value $\alpha$sth1, the second upper limit value $\alpha$sth2, and the third upper limit value $\alpha$sth3 are values that increase in this order.

$$\alpha sth1 < \alpha sth2 < \alpha sth3$$

The driving force limitation program represented by the flowchart of FIG. 5 is executed at each predetermined set time, in the non-operating state of the friction brake 10. In S1, it is determined whether or not the driving force is being limited, and in a case where the determination is NO, the brake temperature Tb is acquired in S2. Then, in S13 to S15, it is determined whether or not the brake temperature Tb is higher than the first start threshold value Tsth1, whether or not the brake temperature Tb is higher than the second start threshold value Tsth2, and whether or not the brake temperature Tb is higher than the third start threshold value Tsth3. In a case where the determination in S15 is YES, the upper limit value of the acceleration is set to the third upper limit value αsth3 in S16, and the limitation control of the driving force is started in S 17. In a case where the determination in S14 is YES, the upper limit value of the acceleration is set to the second upper limit value αsth2 in S18, and in a case where the determination in S13 is YES, the upper limit value of the acceleration is set to the first upper limit value αsth1 in S19.

Since the upper limit value of the acceleration is gradually reduced as the brake temperature Tb increases in this manner, the driver discomfort can be further alleviated, and the vehicle flow can be made less likely to be disrupted. Additionally, this can enhance the product value.

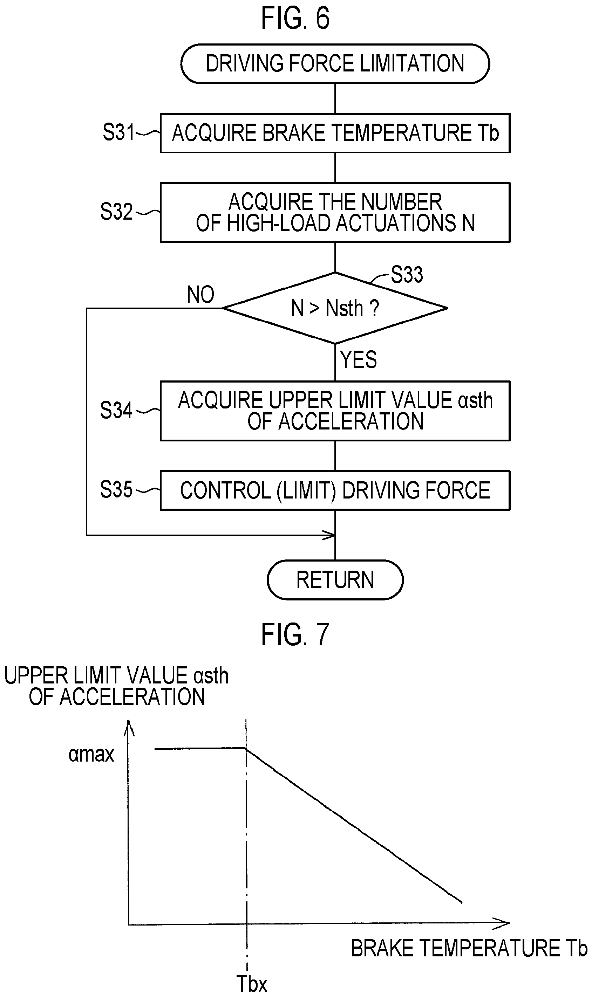

Further, the upper limit value αsth of the acceleration can be continuously reduced as the brake temperature Tb increases. An example of the case is shown in FIGS. 6 and 7. FIG. 7 shows an example of a relationship between the upper limit value αsth of the acceleration and the brake temperature Tb. As shown in FIG. 7, when the brake temperature Tb increases, the upper limit value αsth of the acceleration is set to a smaller value, but in a case where the brake temperature Tb is lower than a set temperature Tbx, the upper limit value of the acceleration is set to a set value αmax. In this case, it is considered that limiting the driving force such that the acceleration does not exceed the set value αmax is not substantially performed.

A map of FIG. 7 is created in advance and stored. The map of FIG. 7 is desirably created for each vehicle based on the specifications of the vehicle.

In addition, in the present embodiment, the number of actuations N of the friction brake 10 in a high load state is counted, and the limitation control of the driving force is started in a case where the number of actuations N exceeds the number of limitation start operations Nsth that is less than the set number of times np. This is because it is known that, in a case where the number of actuations of the friction brake 10 in a high load state exceeds the set number of times np, the friction brake 10 is in an overheated state and the brake fade is likely to occur. In a case where the friction brake 10 is actuated in a state in which the traveling speed of the vehicle is faster than the set speed vp1, it can be estimated that the vehicle is in a high load state. Therefore, in the present embodiment, the number of actuations N in a case where the friction brake 10 is actuated in a state in which the traveling speed of the vehicle is faster than the set speed vp1 is counted.

In the flowchart of FIG. 6, the brake temperature Tb is acquired in S31, the number of actuations N of the friction brake 10 in a high load state is acquired in S32, and in S33, it is determined whether or not the number of actuations N is greater than the number of limitation start operations Nsth. In a case where the determination is YES, based on the map shown in FIG. 7, in S34, the upper limit value αsth of the acceleration is acquired based on the brake temperature Tb, and in S35, the limitation control of the driving force is performed.

Since the upper limit value αsth of the acceleration is set to a value that continuously decreases as the brake temperature Tb increases in this manner, the driver discomfort can be further alleviated.

As described above, in the above embodiment, the vehicle control ECU 20 can be considered as an example of a vehicle controller. Meanwhile, the driving force limitation unit 22 can also be considered as an example of the vehicle controller.

In the flowchart of FIG. 6, steps S32 and S33 are not essential. In the non-operating state of the friction brake 10, the upper limit value αsth of the acceleration can also be set at all times based on the brake temperature Tb.

In addition, the brake temperature may be acquired by the vehicle control ECU 20 or may be acquired by an external computer. In other words, the brake temperature acquisition unit 24 and the driving force limitation unit 22 are primarily based on a common computer but can be primarily based on separate computers. Further, the brake temperature acquisition unit 24 may be provided outside the vehicle. The method of acquiring the brake temperature is not limited to the method of the present embodiment.

Moreover, in addition to the aspects described above, the present invention can be implemented in various modified and improved aspects based on the knowledge of those skilled in the art, such as allowing the vehicle control system to be installed in a hybrid electric vehicle, a battery electric vehicle, an engine-driven vehicle, or the like.

(1) A vehicle control system that controls a vehicle may include a vehicle controller that limits a driving force to be applied to the vehicle based on a brake temperature that is a temperature of a friction brake provided on a wheel of the vehicle.
(2) In the vehicle control system according to (1), the vehicle controller may start limiting the driving force in a case where the brake temperature is higher than a start threshold value that is a threshold value in a non-operating state of the friction brake.
(3) In the vehicle control system according to (2), the vehicle controller may start limitation control of the driving force in a case where the brake temperature is higher than the start threshold value, and end limiting the driving force in a case where the brake temperature is lower than an end threshold value that is a smaller value than the start threshold value.
(4) In the vehicle control system according to any one of (1) to (3), the vehicle controller may limit the driving force such that an acceleration of the vehicle does not exceed a first upper limit value, in a case where the brake temperature is higher than a first start threshold value, and limit the driving force such that the acceleration does not exceed a second upper limit value that is greater than the first upper limit value, in a case where the brake temperature is equal to or lower than the first start threshold value and higher than a second start threshold value.

At least one of the upper limit value of the acceleration and the start threshold value of the brake temperature can be set based on the specifications of the vehicle. For example, in a vehicle with excellent cooling properties or heat dissipation properties for the friction brakes, the necessity to limit the driving force is low. Therefore, for a vehicle with excellent cooling properties or heat dissipation properties, the upper limit value of the acceleration can be set to a larger value, the start threshold value can be set to a larger value, or the like, as compared with a vehicle with poor cooling properties or heat dissipation properties. In addition, for a vehicle in which a large pressing force is applied to the friction brake, the necessity to limit the driving force is high. Therefore, for a vehicle including a friction brake that applies a large pressing force, it is desirable to set the start threshold value to a smaller value or set the upper limit value of the acceleration to a smaller value, as compared with a vehicle including a friction brake that applies a small pressing force.

(5) In the vehicle control system according to any one of (1) to (4), the vehicle controller may set an upper limit value of an acceleration as a limit value of the driving force based on the brake temperature, and limit the driving force such that the acceleration does not exceed the upper limit value.

(6) In the vehicle control system according to any one of (1) to (5), the vehicle controller may set an upper limit value of an acceleration as a limit value of the driving force to a smaller value as the brake temperature increases, and limit the driving force such that the acceleration does not exceed the upper limit value.

It is desirable that the relationship between the brake temperature and the upper limit value of the acceleration is mapped in advance and stored in the storage unit.

(7) In the vehicle control system according to any one of (1) to (6), the vehicle control system may further include a brake temperature acquisition unit that acquires the brake temperature, and the brake temperature acquisition unit may acquire the brake temperature based on an energy balance in the friction brake.

The energy balance in the friction brake can be acquired based on the specifications of the vehicle, the traveling state, the outside air temperature, and the like.

**Claims**

1. A vehicle control system configured to control a vehicle, the vehicle control system comprising an electronic control unit (20) configured to limit a driving force to be applied to the vehicle based on a brake temperature that is a temperature of a friction brake (10) provided on a wheel of the vehicle.

2. The vehicle control system according to claim 1, wherein the electronic control unit (20) is configured to

   start limiting the driving force in a case where the brake temperature is higher than a start threshold value that is a threshold value in a non-operating state of the friction brake (10), and end limiting the driving force in a case where the brake temperature is lower than an end threshold value that is lower than the start threshold value.

3. The vehicle control system according to claim 1, wherein the electronic control unit (20) is configured to

   limit the driving force such that an acceleration of the vehicle does not exceed a first upper limit value, in a case where the brake temperature is higher than a first start threshold value, and limit the driving force such that the acceleration does not exceed a second upper limit value that is greater than the first upper limit value, in a case where the brake temperature is equal to or lower than the first start threshold value and higher than a second start threshold value.

4. The vehicle control system according to claim 1 or 2, wherein the electronic control unit (20) is configured to

   set an upper limit value of an acceleration as a limit value of the driving force based on the brake temperature, and limit the driving force such that the acceleration does not exceed the upper limit value.

# FIG. 1

VEHICLE CONTROL ECU ~20

DRIVE DEVICE ~26

MAIN SWITCH (IGSW) ~28

DRIVING FORCE LIMITATION UNIT ~22

BRAKE TEMPERATURE ACQUISITION UNIT ~24

OUTSIDE AIR TEMPERATURE SENSOR ~36

TRAVELING STATE DETECTION DEVICE ~30

WHEEL SPEED SENSOR ~32

ACCELERATION SENSOR ~34

# FIG. 2

DRIVING FORCE LIMITATION

S1 — IS DRIVING FORCE BEING LIMITED?

YES →

NO ↓

S2 — ACQUIRE BRAKE TEMPERATURE Tb

S3 — $Tb > Tsth$ ?

NO →

YES ↓

S4 — ACQUIRE UPPER LIMIT VALUE $\alpha sth$ OF ACCELERATION

TURN ON DRIVING FORCE LIMITATION ~S5

S6 — $Tb < Teth$ ?  NO →

YES ↓

S7 — TURN OFF DRIVING FORCE LIMITATION

RETURN

# FIG. 3

$$Qin = Qst - Qout \quad \cdot \ \cdot \ \cdot \ (1)$$

$$Qst = Qst1 + Qst2 \quad \cdot \ \cdot \ \cdot \ (2)$$

$$Qst1 = \frac{1}{2} \Delta K \beta C_1 C_2 \quad \cdot \ \cdot \ \cdot \ (3)$$

$$\Delta K = \frac{1}{2} M (Vbe^2 - V^2) \quad \cdot \ \cdot \ \cdot \ (4)$$

$$Qst2 = \frac{1}{2} \Delta U \beta C_1 C_2 \quad \cdot \ \cdot \ \cdot \ (5)$$

$$\Delta U = M * g * Vs * \Delta s * \sin\theta \quad \cdot \ \cdot \ \cdot \ (6)$$

$$Qout = hA (Tbe - Tatm) \Delta s \quad \cdot \ \cdot \ \cdot \ (7)$$

$$Qin = \Delta Tb * wb * C \quad \cdot \ \cdot \ \cdot \ (8)$$

$$\left\{ \begin{array}{l} Tro = (T_{ro\_IGOFF} - Tatm) \exp (- \dfrac{h_{stop} * A}{wb * C} s_{IGOFF}) + Tatm \\ \\ Tro = Tatm \end{array} \right. \quad \cdot \ \cdot \ \cdot \ (9)$$

$$Tb = Tro + \Sigma \Delta Tb$$

$$Tb (n) = Tb (n-1) + \Delta Tb \quad \cdot \ \cdot \ \cdot \ (10)$$

# FIG. 4

# FIG. 5

DRIVING FORCE LIMITATION

S1 — IS DRIVING FORCE BEING LIMITED?

S2 — ACQUIRE BRAKE TEMPERATURE Tb

S13 — Tb > Tsth1?

S19 — UPPER LIMIT VALUE αsth OF ACCELERATION = αsth1

S14 — Tb > Tsth2?

S18 — UPPER LIMIT VALUE αsth OF ACCELERATION = αsth2

S15 — Tb > Tsth3?

S16 — UPPER LIMIT VALUE αsth OF ACCELERATION = αsth3

S17 — TURN ON DRIVING FORCE LIMITATION

S6 — Tb < Teth?

S7 — TURN OFF DRIVING FORCE LIMITATION

YES
NO

RETURN

## FIG. 6

DRIVING FORCE LIMITATION

S31 — ACQUIRE BRAKE TEMPERATURE Tb

S32 — ACQUIRE THE NUMBER OF HIGH-LOAD ACTUATIONS N

S33 — $N > Nsth$ ?

NO

YES

S34 — ACQUIRE UPPER LIMIT VALUE $\alpha sth$ OF ACCELERATION

S35 — CONTROL (LIMIT) DRIVING FORCE

RETURN

## FIG. 7

UPPER LIMIT VALUE $\alpha sth$ OF ACCELERATION

$\alpha max$

Tbx

BRAKE TEMPERATURE Tb

Europäisches
Patentamt

European
Patent Office

Office européen
des brevets

# EUROPEAN SEARCH REPORT

Application Number

EP 25 15 6886

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/315354 A1 (KLEEMANN RALF [DE] ET AL) 17 October 2019 (2019-10-17) * paragraph [0015] - paragraph [0036]; figures 1,2 * ----- | 1-4 | INV. B60W30/188 |
| A | US 3 688 295 A (TSORAS JOHN ET AL) 29 August 1972 (1972-08-29) * column 1, line 24 - line 28 * * column 4, line 61 - column 5, line 2; figure 4 * ----- | 2 | |

TECHNICAL FIELDS
SEARCHED      (IPC)

B60W
B60T

The present search report has been drawn up for all claims

| Place of search | Date of completion of the search | Examiner |
|---|---|---|
| Munich | 8 July 2025 | Engelhardt, Helmut |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.............................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 15 6886

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2025

| Patent document cited in search report | | Publication date | Patent family member(s) | | Publication date |
|---|---|---|---|---|---|
| US 2019315354 | A1 | 17-10-2019 | CN | 110386140 A | 29-10-2019 |
| | | | DE | 102018205525 A1 | 17-10-2019 |
| | | | US | 2019315354 A1 | 17-10-2019 |
| US 3688295 | A | 29-08-1972 | CA | 933258 A | 04-09-1973 |
| | | | DE | 2051428 A1 | 06-05-1971 |
| | | | FR | 2066317 A5 | 06-08-1971 |
| | | | GB | 1322790 A | 11-07-1973 |
| | | | JP | S5117075 B1 | 29-05-1976 |
| | | | SE | 362519 B | 10-12-1973 |
| | | | US | 3688295 A | 29-08-1972 |

EPO FORM P0459

For more details about this annex : see Official Journal of the European Patent Office, No. 12/82

EP 4 610 131 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113320383
- CN 113320383 A

- JP 2023089822 A